# EUROPEAN PATENT APPLICATION

(11) **EP 4 502 355 A1**
(43) Date of publication of application: **05.02.2025**
(21) Application number: 23779326.0
(22) Date of filing: 07.03.2023
(51) Int. Cl.: F02D 19/08, F02B 19/12, F02D 41/22, F02D 45/00

(54) **INTERNAL COMBUSTION ENGINE**

(30) Priority: 31.03.2022 JP 2022060419
(71) Applicant: KAWASAKI JUKOGYO KABUSHIKI KAISHA, Kobe-shi, Hyogo 650-8670 (JP)
(72) Inventor: MIYAMOTO, Sekai, Kobe-shi, Hyogo 650-8670 (JP)
(74) Representative: Arnold & Siedsma
(86) International application number: PCT/JP2023/008660
(87) International publication number: WO 2023/189299

(57) **Abstract**

An internal combustion engine (1) includes: a cylinder (5) in which a combustion chamber (3) is defined; a piston (7) which reciprocates in the cylinder (5); an intake port (9) via which air is introduced into the combustion chamber (3); a first fuel supply line (11) via which a first fuel (F1) is delivered to the combustion chamber (3) or the intake port (9); and a second fuel supply line (13) which is provided separate from the first fuel supply line (11) and via which a second fuel (F2) having a lower reactivity than that of the first fuel (F1) is delivered to the combustion chamber (3) or the intake port (9). The internal combustion engine (1) may be provided with an abnormal combustion detector (33) configured to detect abnormal combustion in the combustion chamber (3) and a fuel supply controller (30) configured to execute control, in response to the abnormal combustion being detected by the abnormal combustion detector (33), such that the amount of the first fuel (F1) to be delivered is decreased and the amount of the second fuel (F2) to be delivered is increased.

## Description

### CROSS REFERENCE TO THE RELATED APPLICATION

This application is based on and claims Convention priority to Japanese patent application No. 2022-060419, filed March 31, 2022, the entire disclosure of which is herein incorporated by reference as a part of this application.

### BACKGROUND OF THE INVENTION

### (Field of the Invention)

The present disclosure relates to an internal combustion engine in which more than one type of fuel with different reactivities can be used.

### (Description of Related Art)

An internal combustion engine which uses more than one type of fuel with different reactivities, e.g., hydrogen gas and hydrocarbon-based fuel, as its fuel is proposed in prior art (e.g., see Patent Document 1).

Typically, in such an internal combustion engine, more than one type of fuel is mixed and delivered as mixed gas to a combustion chamber or an intake port.

### [Related Document]

### [Patent Document]

[Patent Document 1] JP Laid-open Patent Publication No. 2007-278151

### SUMMARY OF THE INVENTION

If abnormal combustion such as knocking, pre-ignition, backfire, or afterfire occurs in the combustion chamber of the above-described internal combustion engine, it could only be remedied by either decreasing the amount of the mixed fuel to be delivered or interrupting the delivery of the mixed fuel, thus, making a power drop or discontinued operation of the internal combustion engine inevitable.

Hence, one aim of the present disclosure is to overcome the above-described problem by providing an internal combustion engine in which more than one type of fuel can be used and which can remedy abnormal combustion without compromising its power output.

To overcome the above-described problem, an internal combustion engine according to the present disclosure includes: a cylinder in which a combustion chamber is defined; a piston which reciprocates in the cylinder; an intake port via which air is introduced into the combustion chamber; a first fuel supply line via which a first fuel is delivered to the combustion chamber or the intake port; a second fuel supply line which is provided separate from the first fuel supply line and via which a second fuel having a lower reactivity than that of the first fuel is delivered to the combustion chamber or the intake port; and a fuel supply controller configured to detect abnormal combustion in the combustion chamber and execute control, in response to detecting the abnormal combustion, such that the amount of the first fuel to be delivered is decreased and the amount of the second fuel to be delivered is increased.

### (Effect of the Invention)

Thus, the present disclosure provides an internal combustion engine in which more than one type of fuel can be used and which can remedy abnormal combustion without compromising its power output.

Any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments made with the aid of the accompanying drawings. However, the embodiments and the drawings are given merely for the purpose of illustration and explanation, and should not be used to delimit the scope of the present disclosure, which scope is to be delimited by the appended claims. In the accompanying drawings, alike numerals are assigned to and indicate alike parts throughout the different figures:
Fig. 1 shows a schematic, vertical cross-sectional view of the general configuration of an internal combustion engine, in accordance with an embodiment of the present disclosure;
Fig. 2 shows a vertical cross-sectional view of the internal combustion engine of Fig. 1, illustrating an example of how it operates in response to abnormal combustion being identified;
Fig. 3 shows a schematic, vertical cross-sectional view of the general configuration of an internal combustion engine, in accordance with a variant of the embodiment of Fig. 1;
Fig. 4 shows a schematic, block diagram of the general configuration of an internal combustion engine, in accordance with a variant of the embodiment of Fig. 1;
Fig. 5 shows a vertical cross-sectional view of the internal combustion engine of Fig. 4, illustrating an example of how it operates in response to abnormal combustion being identified;
Fig. 6 shows a schematic, vertical cross-sectional view of the general configuration of an internal combustion engine, in accordance with another embodiment of the present disclosure; and
Fig. 7 shows a schematic, vertical cross-sectional view of the general configuration of an internal combustion engine, in accordance with a variant of the embodiment of Fig. 6.

### DESCRIPTION OF EMBODIMENTS

While embodiments of the present disclosure will be described below in accordance with the drawings, they only represent a few of the embodiments of the present disclosure.

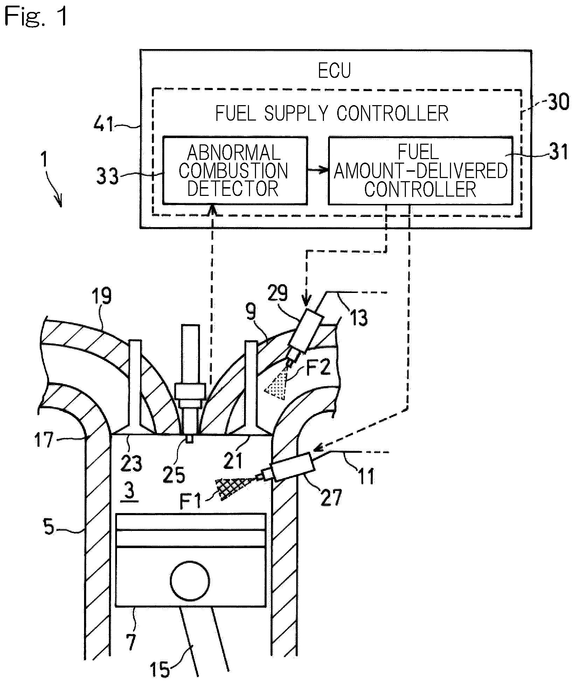

Fig. 1 depicts an internal combustion engine 1 in accordance with an embodiment of the present disclosure. The internal combustion engine 1 is of a design in which two types of fuel are mixed and burned, and includes: a cylinder 5 in which a combustion chamber 3 is defined; a piston 7 which reciprocates in the cylinder 5; an intake port 9 via which air is introduced into the combustion chamber 3; a so-called direct injection-type, first fuel supply line 11 via which a first fuel F1 is delivered to the combustion chamber 3, and a second fuel supply line 13 via which a second fuel F2 is delivered to the intake port 9. The second fuel supply line 13 is provided separate from the first fuel supply line 11.

The first fuel F1 has a relatively high reactivity. In the instant embodiment, hydrogen-containing gas is used as the first fuel F1. The term "hydrogen-containing gas" used herein encompasses a fuel partially composed of hydrogen gas as well as a fuel entirely composed of hydrogen gas. The second fuel F2 has a lower reactivity than that of the first fuel F1. In the instant embodiment, natural gas is used as the second fuel F2. Hydrogen-containing gas is only one of the non-limiting examples of the first fuel F1. For instance, normal heptane can be used for the first fuel F1. Natural gas is only one of the non-limiting examples of the second fuel F2. For instance, ammonia, alcohols such as methanol and ethanol, gasoline, heavy oil, and/or light oil can be used for the second fuel F2.

The piston 7 reciprocates in the cylinder 5 to drive a crankshaft (not shown) into motion through a connecting rod 15. The internal combustion engine 1 includes a cylinder head 17 which is disposed on the cylinder 5 and which is formed with the intake port 9 and an exhaust port 19 that are open to the combustion chamber 3. The combustion chamber 3 is delimited by the inner peripheral surface of the cylinder 5, the crown surface of the piston 7, and the underside of the cylinder head 17.

The cylinder head 17 includes an intake valve 21 which opens and closes a part of the intake port 9 which forms an opening for the combustion chamber 3 and an exhaust valve 23 which opens and closes a part of the exhaust port 19 which forms an opening for the combustion chamber 3. The cylinder head 17 also includes an ignition plug 25 which faces towards the combustion chamber 3. It should be noted that, while the ignition plug 25 is used to ignite the fuel(s) in the combustion chamber 3 of the internal combustion engine 1 of the instant embodiment, different ignition methods may alternatively be used as will be discussed later. Depending on the different ignition method used, the ignition plug 25 may be omitted.

The first fuel F1 delivered via the first fuel supply line 11 is injected into the combustion chamber 3 through a first fuel injector valve 27. The second fuel F2 delivered via the second fuel supply line 13 is injected into the combustion chamber 3 through a second fuel injector valve 29. The internal combustion engine 1 of the instant embodiment can operate by only using the first fuel F1, using both of the first fuel F1 and the second fuel F2, and only using the second fuel F2. Nevertheless, it is sufficient that the internal combustion engine 1 is operable by using both of the fuels F1 and F2, and using only the fuel F1 or the fuel F2. Examples of application of the internal combustion engine 1 can include, in a non-limiting manner, a drive for vehicles, a drive for industrial equipment including unmanned drones, lawn mowers, and chainsaws, and power generation.

The internal combustion engine 1 also includes a fuel supply controller 30 configured to control the supply of the fuels F1 and F2. The fuel supply controller 30 is configured to detect or identify abnormal combustion in the combustion chamber 3 and execute control, in response to detecting the occurrence of abnormal combustion, such that the amount of the first fuel F1 to be delivered is decreased and the amount of the second fuel F2 to be delivered is increased. In the illustrated example, the fuel supply controller 30 includes a fuel amount-delivered controller 31 configured to control the amounts of the fuels F1 and F2 to be delivered and an abnormal combustion detector 33 configured to detect abnormal combustion in the combustion chamber 3.

For instance, the abnormal combustion detector 33 in the instant embodiment is configured to detect the occurrence of abnormal combustion on the basis of sensing the combustion pressure in the combustion chamber 3, an ion current, the vibrations of the internal combustion engine 1, the internal pressure of the intake port 9, and/or the internal pressure of the exhaust port 19, and/or through other measures.

The combustion pressure is sensed by means of a combustion pressure sensor. The combustion pressure sensor comprises a sensor device that receives the combustion pressure on a metal diaphragm to create a compression force on an internal force sensing element which, in turn, generates a voltage signal output proportional to the combustion pressure on the basis of the piezo resistance effect of silicon. The ion current is sensed by applying a voltage across an electrode which is positioned to be situated inside a flame within the combustion chamber 3 and determining an ion current generated by the ions present in the flame. The vibrations of the internal combustion engine 1 are sensed by means of a knock sensor located at, for example, the cylinder 5 or a crankcase (not shown) of the internal combustion engine 1 and/or by means of a vibration sensor bult in a given component of the internal combustion engine 1 such as the ignition plug 25 and the fuel injector valves 27 and 29. Based on such measure(s), pre-ignition, self-ignition, and/or knocking in the combustion chamber 3 can be identified.

The internal pressure of the intake port 9 and the internal pressure of the exhaust port 19 are sensed by means of a pressure sensor located in the intake port 9 and a pressure sensor located in the exhaust port 19, respectively. The sensed internal pressure of the intake port 9 can be used to detect backfire which is the propagation of a flame back into the intake port 9. The sensed internal pressure of the exhaust port 19 can be used to detect afterfire which is the phenomenon of propagation of a flame into and through the exhaust port 19.

Only one or more than one of these abnormal combustion detection measures may be employed, either alone or in combination. Further, the abnormal combustion detector 33 may be configured to detect abnormal combustion through temperature sensing, residual oxygen concentration sensing, and/or other measures, as an alternative to or in addition to the above-described example measures.

It should be noted that the abnormal combustion detector 33 includes, among others, a sensor device that senses a physical quantity of interest (e.g., pressure, current, and/or vibrations), a variety of circuits that perform required processing such as signal transformation and/or computation on the acquired sensing value, a memory for storing information required for the processing, a power source device such as a battery or a power circuitry through which power is fed and received from an external source, and a transmitter circuit for external transmission of output signals through a cabled or wireless connection.

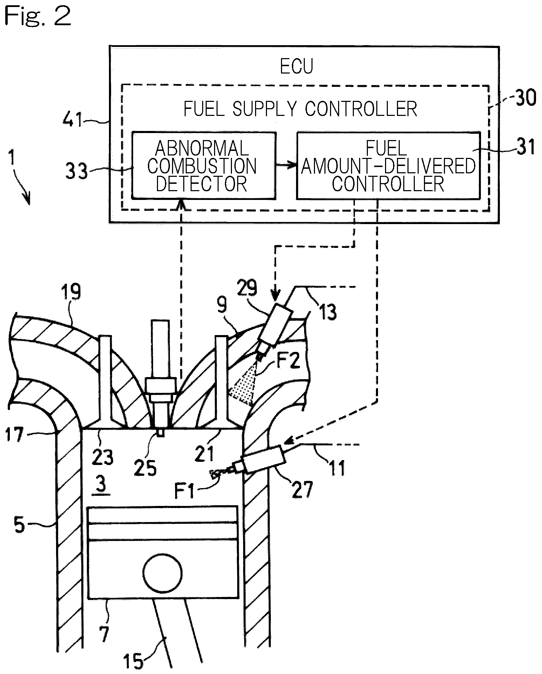

As illustrated in Fig. 2, in response to abnormal combustion being detected by the abnormal combustion detector 33 and receiving an abnormal combustion detection signal output from the abnormal combustion detector 33, the fuel amount-delivered controller 31 executes control such that the amount of the first fuel F1 to be delivered is decreased and the amount of the second fuel F2 to be delivered is increased. In particular, by way of example, the fuel amount-delivered controller 31 controls the amount of the first fuel F1 to be delivered and the amount of the second fuel F2 to be delivered, by adjusting the opening ratios of the first fuel injector valve 27 and the second fuel injector valve 29, respectively. It should be understood that decrease in the amount of the first fuel F1 to be delivered as executed by the fuel amount-delivered controller 31 herein can include interruption of the delivery of the first fuel F1. The control of the amounts of the fuels F1 and F2 to be delivered can also be conducted through a measure different from the above-described adjustment of the opening ratios of the fuel injector valves 27 and 29. For instance, the amounts of the fuels F1 and F2 to be delivered may be controlled by adjusting fuel injection pressures and/or fuel injection durations, and/or by regulating the amounts of the fuels F1 and F2 to be supplied to the respective fuel supply lines 11 and 13 by adjusting the opening ratios of respective supply valves associated with corresponding fuel tanks.

Since the first fuel supply line 11 and the second fuel supply line 13 are formed separate from each other in the internal combustion engine 1 of the instant embodiment, the amounts of the first fuel F1 and the second fuel F2 to be delivered to the internal combustion engine 1 can be easily controlled independently of each other. By relying on such a configuration, in the event of the occurrence of abnormal combustion being detected, control can be executed so that the amount of the first fuel F1 to be delivered is decreased and the amount of the second fuel F2 to be delivered is increased. In this way, the abnormal combustion can be remedied without compromising the power output of the internal combustion engine 1.

In the instant embodiment, the fuel supply controller 30 may execute fuel amount-delivered control differently depending on the mode of abnormal combustion detected, i.e., differently among pre-ignition, self-ignition, knocking, backfire, and afterfire.

It should be noted that the fuel supply controller 30 includes, among others, a variety of circuits that perform processing required for the above-described control, a memory for storing information required for the processing, a power source device such as a battery or a power circuitry through which power is fed and received from an external source, a receiver circuit for external reception of input signals through a cabled or wireless connection, and a transmitter circuit for external transmission of output signals through a cabled or wireless connection. While the fuel amount-delivered controller 31 and the abnormal combustion detector 33 are provided as separate pieces of hardware in the instant embodiment, they may be integrated into the same piece of hardware which forms the fuel supply controller 30. By way of example, the fuel supply controller 30 is also implemented by a control unit 41, such as an ECU, which is used to control the entire system to which the internal combustion engine 1 is applied. Here, the fuel supply controller 30 may be integrated into a piece of hardware which also forms the control unit 41.

It should be understood that, while the instant embodiment illustrates an example configuration in which the first fuel F1 is delivered into the combustion chamber 3 and the second fuel F2 is delivered into the intake port 9, these fuels may be delivered to any one of the combustion chamber 3 and the intake port 9.

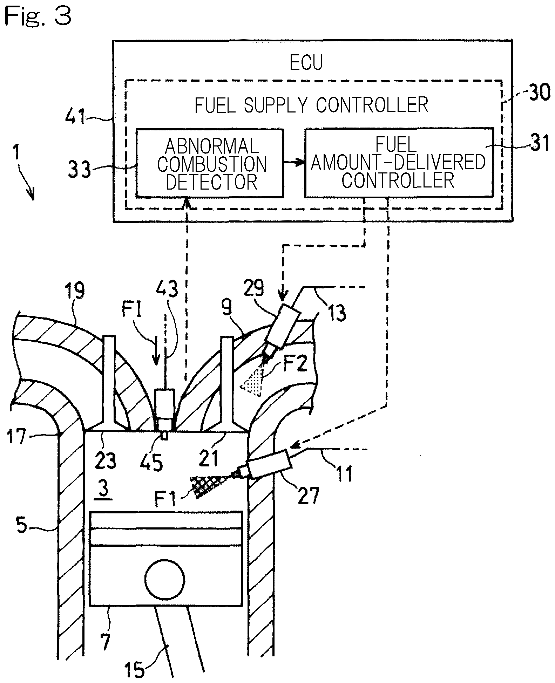

While the instant embodiment also illustrates an example configuration in which the internal combustion engine 1 includes the ignition plug 25 to perform ignition within the combustion chamber 3, a fuel serving as an ignition source (which will hereinafter be referred to as an "ignition fuel FI") may be injected into the combustion chamber 3 via an ignition fuel supply line 43 and an ignition fuel injector valve 45 to allow ignition to take place through self-ignition of the ignition fuel FI as an alternative to the use of the ignition plug, as shown in a variant of Fig. 3. Fuels with a high ignitability and/or diesel fuels such as, for example, light oil, heavy oil, and/or biodiesel fuels can be used as the ignition fuel FI. By providing the ignition fuel supply line 43, it is possible to use the ignition fuel FI in case of emergency or when the first fuel F1 and the second fuel F2 have been depleted, in order to continue the operation of the internal combustion engine 1.

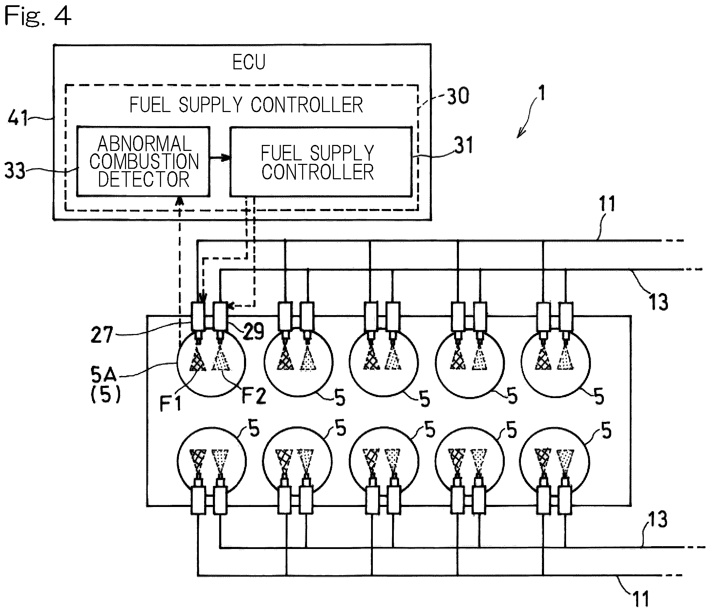

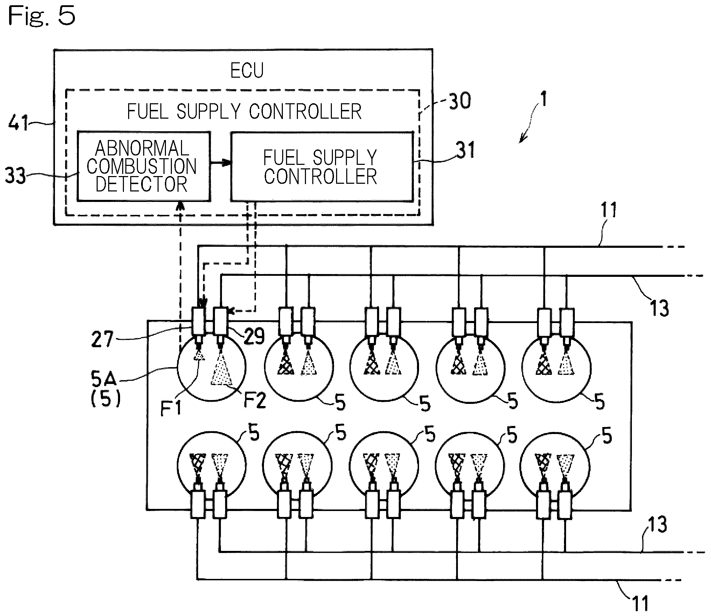

Further, the internal combustion engine 1 of the instant embodiment may be in the form of a multi-cylinder internal combustion engine with a plurality of cylinders 5 as shown in Fig. 4, e.g., a ten-cylinder internal combustion engine which is illustrated in Fig. 4. By using a multi-cylinder internal combustion engine 1, a higher power output can be achieved. Each of the cylinders 5 in this case has a configuration analogous to that in the embodiment described in connection with Figs. 1 to 3. As illustrated in Fig. 5, the fuel supply controller 30 executes control such that the amount of the first fuel to be delivered is decreased and the amount of the second fuel F2 to be delivered is increased, only for a particular one of the cylinders 5 for which abnormal combustion is detected by the abnormal combustion detector 33, i.e., the upper leftmost cylinder 5A in the example illustrated in the figure. It should be noted that connection lines between the cylinders 5 and the fuel amount-delivered controller 31 and abnormal combustion detector 33 are not shown in Figs. 4 and 5, except for the cylinder 5A.

It should be understood that, when each of different groups of the cylinders 5, e.g., belonging to the different banks of the multi-cylinder internal combustion engine 1, shares its own fuel supply and exhaust systems, the fuel supply controller 30 may execute the fuel amount-delivered control, at least only for a group of the cylinders 5 which include the cylinder 5A with the abnormal combustion.

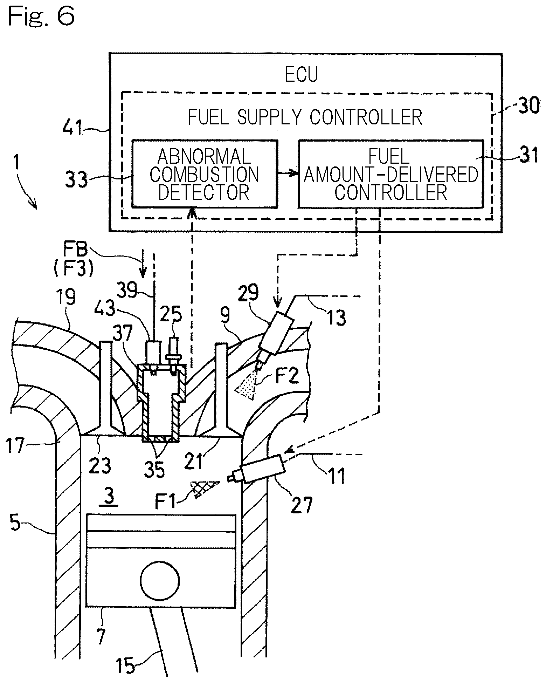

It should be understood that the internal combustion engine 1 may be a prechamber internal combustion engine, as shown in another embodiment of Fig. 6. In addition to the features shown in Fig. 1, the internal combustion engine 1 of the embodiment under discussion includes: a prechamber 37 located adjacent to the combustion chamber 3 and having an orifice 35 via which the prechamber 37 is in communication with the combustion chamber 3 that serves as a primary chamber; and a prechamber fuel supply line 39 via which a prechamber fuel FB is delivered to the prechamber 37. In the illustrated example, the prechamber 37 is located at the cylinder head 17.

In the prechamber internal combustion engine 1, the first fuel F1 in a diluted form is delivered to the combustion chamber 3 which serves as a primary chamber, while the second fuel F2 is delivered to the intake port 9. In addition, the prechamber fuel FB is delivered to the prechamber 37, so that the prechamber fuel FB is ignited and burned within the prechamber 37 to form torch flame through the orifice 35 towards the combustion chamber 3 and burn the first fuel F1 within the combustion chamber 3. By burning fuel(s) in a diluted form within the combustion chamber 3, the combustion temperature can be lowered to thereby reduce the emission of NOx and suppress the occurrence of abnormal combustion. In addition, an improved combustion efficiency can be achieved. Note that the fuel to be burned by the torch flame may also be the second fuel F2 or a mixed fuel of the first fuel F1 and the second fuel F2.

The prechamber fuel supply line 39 is provided separate from the first fuel supply line 11 and the second fuel supply line 13. The fuel supply controller 30 of the internal combustion engine 1 of the instant variant, too, executes control, upon detecting abnormal combustion, that is, in response to the abnormal combustion being detected by the abnormal combustion detector 33 and the fuel amount-delivered controller 31 receiving an abnormal combustion detection signal output from the abnormal combustion detector 33 according to the present example, such that the amount of the first fuel F1 to be delivered is decreased and the amount of the second fuel F2 to be delivered is increased.

In the instant embodiment, a third fuel F3 of a type different from the first fuel F1 or the second fuel F2 is used as the prechamber fuel FB. Fuels with a higher ignitability than those of the first fuel F1 and the second fuel F2, and/or diesel fuels such as, for example, light oil, heavy oil, and/or biodiesel fuels can be used as the third fuel F3. By using a fuel with a high ignitability as the third fuel, an improved ignition stability can be achieved. Yet, this is only one of the non-limiting examples of the prechamber fuel FB. The first fuel F1, the second fuel F2, or a mixed fuel of the first fuel F1 and the second fuel F2 can also be used as the prechamber fuel FB.

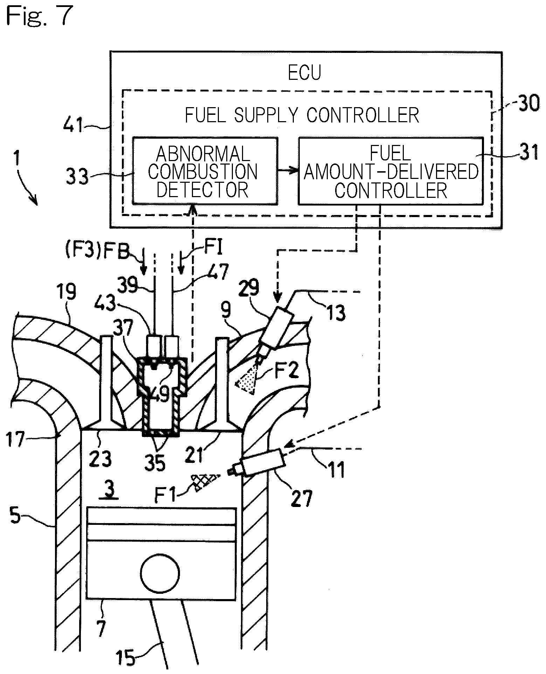

Furthermore, while the instant embodiment illustrates an example configuration in which the internal combustion engine 1 includes the ignition plug 25 to provide ignition within the prechamber 37, ignition may alternatively be achieved by self-ignition of the ignition fuel FI injected into the prechamber 3 via a prechamber ignition fuel supply line 47 and a prechamber ignition fuel injector valve 49 as an alternative to the use of the ignition plug, as shown in the variant of Fig. 7.

According to the internal combustion engines 1 of the embodiments that are described herein thus far, in the event of the occurrence of abnormal combustion being detected, control can be executed so that the amount of the first fuel F1 to be delivered is decreased and the amount of the second fuel F2 to be delivered is increased. In this way, the abnormal combustion can be remedied without compromising the power output of the internal combustion engines 1.

The internal combustion engines 1 of the embodiments herein may be multi-cylinder internal combustion engines in which the cylinder comprises a plurality of cylinders 5, the first fuel supply line 11 is provided for each of the plurality of cylinders 5, and the second fuel supply line 13 is provided for each of the plurality of cylinders 5. The fuel supply controller 30 in this case may execute control such that the amount of the first fuel to be delivered is decreased and the amount of the second fuel F2 to be delivered is increased, at least for a minimum acceptable number of cylinders 5 including the cylinder 5A for which abnormal combustion is detected. According to this configuration, abnormal combustion can be remedied without compromising the power output of the internal combustion engines 1, including when they are designed as multi-cylinder internal combustion engines that produce a higher power output.

The internal combustion engines 1 of the embodiments herein may further include the ignition fuel supply line 43 via which the ignition fuel FI different from the first fuel F1 or the second fuel F2 is injected to the combustion chamber 3. According to this configuration, it is possible to use the ignition fuel FI in case of emergency or when the first fuel F1 and the second fuel F2 have been depleted, in order to continue the operation of the internal combustion engines 1.

The internal combustion engines 1 of the embodiments herein may be prechamber internal combustion engines 1 which further include: the prechamber 37 located adjacent to the combustion chamber 3 and having the orifice 35 via which the prechamber 37 is in communication with the combustion chamber 3; and the prechamber fuel supply line 39 which is provided separate from the first fuel supply line 11 and the second fuel supply line 13 and via which the prechamber fuel FB is delivered to the prechamber 37. According to this configuration, the combustion temperature can be lowered to thereby reduce the emission of NOx and suppress the occurrence of abnormal combustion. In addition, an improved combustion efficiency can be achieved.

The prechamber fuel FB in case of the above-described prechamber internal combustion engines 1 may comprise the third fuel F3 different from the first fuel F1 or the second fuel F2. Also, the prechamber ignition fuel supply line 47 may be provided via which the ignition fuel FI different from the first fuel F1 or the second fuel F2 is injected to the prechamber 37. According to this configuration, too, the combustion temperature can be lowered to thereby reduce the emission of NOx and suppress the occurrence of abnormal combustion. In addition, an improved combustion efficiency can be achieved.

In the internal combustion engines 1 of the embodiments herein, the first fuel F1 may comprise hydrogen-containing gas. According to this configuration, the amount of carbon dioxide emitted from the internal combustion engines 1 can be lowered.

While preferred embodiments of the present disclosure have been described thus far with reference to the drawings, various additions, modifications, or omissions can be made therein without departing from the principle of the present disclosure and, thus, are also encompassed within the scope of the present disclosure.

### (Reference Symbols)

- 1: internal combustion engine
- 3: combustion chamber
- 5: cylinder
- 7: piston
- 9: intake port
- 11: first fuel supply line
- 13: second fuel supply line
- 30: fuel supply controller
- 31: fuel amount-delivered controller
- 33: abnormal combustion detector
- 37: prechamber
- F1: first fuel
- F2: second fuel

## Claims

1. An internal combustion engine comprising:
a cylinder in which a combustion chamber is defined;
a piston which reciprocates in the cylinder;
an intake port via which air is introduced into the combustion chamber;
a first fuel supply line via which a first fuel is delivered to the combustion chamber or the intake port;
a second fuel supply line which is provided separate from the first fuel supply line and via which a second fuel having a lower reactivity than that of the first fuel is delivered to the combustion chamber or the intake port; and
a fuel supply controller configured to detect abnormal combustion in the combustion chamber and execute control, in response to detecting the abnormal combustion, such that an amount of the first fuel to be delivered is decreased and an amount of the second fuel to be delivered is increased.

2. The internal combustion engine as claimed in claim 1, wherein
the cylinder comprises a plurality of cylinders,
the first fuel supply line is provided for each of the plurality of cylinders,
the second fuel supply line is provided for each of the plurality of cylinders, and
the fuel supply controller is configured to execute control such that the amount of the first fuel to be delivered is decreased and the amount of the second fuel to be delivered is increased, at least for one of the cylinders for which the abnormal combustion is detected.

3. The internal combustion engine as claimed in claim 1 or 2, further comprising an ignition fuel supply line via which an ignition fuel different from the first fuel or the second fuel is injected to the combustion chamber.

4. The internal combustion engine as claimed in any one of claims 1 to 3, further comprising:
a prechamber located adjacent to the combustion chamber and having an orifice via which the prechamber is in communication with the combustion chamber; and
a prechamber fuel supply line which is provided separate from the first fuel supply line and the second fuel supply line and via which a prechamber fuel is delivered to the prechamber to form torch flame through the orifice.

5. The internal combustion engine as claimed in claim 4, wherein the prechamber fuel comprises a third fuel different from the first fuel or the second fuel.

6. The internal combustion engine as claimed in claim 4 or 5, further comprising a prechamber ignition fuel supply line via which an ignition fuel different from the first fuel or the second fuel is injected to the prechamber.

7. The internal combustion engine as claimed in any one of claims 1 to 6, wherein the first fuel comprises hydrogen-containing gas.
